# EUROPEAN PATENT APPLICATION

(11) **EP 3 355 064 A1**
(43) Date of publication of application: **01.08.2018**
(21) Application number: 17153051.2
(22) Date of filing: 25.01.2017
(51) Int. Cl.: G01N 35/04

(54) **LABORATORY SAMPLE DISTRIBUTION SYSTEM AND LABORATORY AUTOMATION SYSTEM**

(71) Applicant: Roche Diagnostics GmbH, 68305 Mannheim (DE); F. Hoffmann-La Roche AG, 4070 Basel (CH)
(72) Inventor: Reza, Mohsin, 70372 Stuttgart (DE)
(74) Representative: Patentanwälte Ruff, Wilhelm, Beier, Dauster & Partner mbB

(57) **Abstract**

The invention relates to a laboratory sample distribution system comprising a number of optically recognizable geometric shapes placed on a transport plane or a flat template for drawing such geometric shapes. The invention relates further to a laboratory automation system comprising such a laboratory sample distribution system.

## Description

The invention relates to a laboratory sample distribution system and a laboratory automation system.

Known laboratory sample distribution systems are typically used in laboratory automation systems in order to transport samples contained in sample containers between different laboratory stations.

A typical laboratory sample distribution system is shown in document WO 2013/064656 A1. Such a laboratory sample distribution system provides for a high throughput and for reliable operation.

It has been found out that in some cases it is desirable to have some positions marked on a transport plane of a laboratory sample distribution system.

### Object and solution

It is thus an object of the invention to provide for a laboratory sample distribution system in which positions on a transport plane can be recognized. It is a further object of the invention to provide for a laboratory automation system comprising such a laboratory sample distribution system.

This object is achieved by a laboratory sample distribution system according to claim 1, a laboratory sample distribution system according to claim 9 and a laboratory automation system according to claim 14. Preferred embodiments are claimed in the dependent claims.

The invention relates to a laboratory sample distribution system. The laboratory sample distribution system comprises a transport plane, a number of sample container carriers, drive means being adapted to move the sample container carriers on the transport plane, and a control device being configured to control the movement of the sample container carriers on top of the transport plane by driving the drive means such that the sample container carriers move along corresponding transport paths.

According to the invention, a number of optically recognizable geometric shapes are arranged on the transport plane, each geometric shape representing a dedicated field on the transport plane. The drive means may be arranged in rows and columns forming a grid, wherein the grid comprises or defines a number of fields. The optically recognizable geometric shapes may be arranged on the transport plane to visualize some or all of the fields. This allows for a schematic visualization of the drive means which are typically not visible due to the typically opaque transport plane.

By means of the inventive laboratory sample distribution system, fields on the transport plane can be marked with the geometric shapes in a manner that can be recognized optically. For example, the fields can be recognized by an operator and/or by technical means like cameras or other optical recognition systems.

The geometric shapes can be closed geometric shapes.

According to an embodiment, the geometric shapes are directly printed on the transport plane. The term "directly printed" may imply that a certain amount of color representing the geometric shapes is disposed directly on the transport plane. Alternatively, the geometric shapes can, for example, be directly printed on the transport plane by modifying the surface of the transport plane, for example by partially removing or roughening the transport plane, by laser texturing, by etching, etc.

According to an embodiment, the geometric shapes are printed on a sheet covering the transport plane. The sheet can be provided separately from the transport plane and can be placed and fixed on the transport plane.

According to an embodiment, the geometric shapes are printed on a removable cover sheet which protects the sliding surface of the transport plane during transport and/or installation. The sliding surface is the surface of the transport plane on which the sample container carriers move or slide. This can yield a further functionality such that the removable cover sheet providing the geometric shapes also has a protecting function.

According to an embodiment, a first group of the geometric shapes represents a set of input fields. For example, such input fields can be used for barcode readers, for input operations, for gripping devices or other devices needing to input sample containers on the transport plane or into sample container carriers being movably arranged on the transport plane.

According to an embodiment, a second group of the geometric shapes represents a set of output fields. Such output fields may be used in order to remove sample containers from sample container carriers moving on the transport plane. For example, gripping devices or means for sending the sample containers to other entities can use such output fields as dedicated fields on the transport plane where sample containers can be handed over.

According to an embodiment, the geometric shapes of the first group are rotated by 180° with respect to the geometric shapes of the second group. Thus, input fields and output fields can be put at different places, thus easing operation.

According to an embodiment, the geometric shapes are positioned along a straight line adjacent to an edge of the transport plane.

The invention further relates to a laboratory sample distribution system comprising a transport plane, a number of sample container carriers, drive means being adapted to move the sample container carriers on the transport plane, and a control device being configured to control the movement of the sample container carriers on top of the transport plane by driving the drive means such that the sample container carriers move along corresponding transport paths. A flat template having a plurality of holes is provided, the holes being shaped such that outlines of geometric shapes are provided. Thus, the geometric shapes can be drawn optically recognizably on the transport plane using the template when it is placed on the transport plane. Especially, the geometric shapes can be closed geometric shapes. Each geometric shape drawn on the transport plane represents a dedicated field on the transport plane.

By means of the laboratory sample distribution system comprising such a flat template, it is possible to provide a laboratory sample distribution system comprising a means, i.e. the template, that allows drawing geometric shapes on the transport plane such that an operator can define certain fields having a dedicated functionality. The flat template can be adapted to be put at dedicated places on the transport plane. The flat template can be fixed by means of specific fixation means. Additionally, means for positioning and/or aligning the flat template may be provided.

According to an embodiment, the template is made of hard paper or plastic material.

It should be noted that the flat template can have the same size as the transport plane. This allows for easy and reliable positioning and aligning of the flat template on the transport plane. According to an embodiment, the geometric shapes are circles. Such circles are easy to draw and correspond to typically used circular shaped sample container carriers.

According to an embodiment, the drive means are formed as electro-magnetic actuators being arranged below/under the transport plane in rows and columns forming a grid and being controllable by the control device. The sample container carriers each comprise a magnetically active device for interaction with the magnetic field generated by the electro-magnetic actuators such that a magnetic drive force is applied to the sample container carriers. This allows for easy and reliable operation of a laboratory sample distribution system, especially for driving the sample container carriers.

According to an embodiment, the geometric shapes are positioned depending on positions of the electromagnetic actuators.

In this regard, the geometric shapes may be positioned above a center of a respective electro-magnetic actuator. A winding axis of a coil of an electro-magnetic actuator, e.g. extending perpendicular to the transport plane, may define the center of the electro-magnetic actuator. The geometric shapes, e.g. in form of circles, may be arranged coaxially with the winding axis of the coil of the corresponding electromagnetic actuator. This corresponds to the fact that typically fields are defined by respective electro-magnetic actuators. Alternatively, at least some of the geometric shapes may be positioned with a given horizontal offset (in x- and/or y-direction) with regard to the center of a respective electro-magnetic actuator. This may be useful e.g. if an external device having an own electro-magnetic actuator applying a magnetic force to a sample container carrier has to be aligned with regard to the transport plane.

According to an embodiment, the drive means are formed as wheels driven by electric motors being located in the sample container carriers and being controllable by the control device. This allows for propulsion of the sample container carriers by their own drive means.

The invention further relates to a laboratory automation system comprising a number of laboratory stations, preferably pre-analytical, analytical and/or post-analytical stations, and a laboratory sample distribution system according to the invention. With regard to the laboratory sample distribution system, all embodiments and variations as discussed herein can be applied. The stations may be arranged adjacent to the laboratory sample distribution system.

Pre-analytical stations may be adapted to perform any kind of pre-processing of samples, sample containers and/or sample container carriers.

Analytical stations may be adapted to use a sample or part of the sample and the reagent to generate a measuring signal, the measuring signal indicating if and in which concentration, if any, an analyte is existing.

Post-analytical stations may be adapted to perform any kind of post-processing of samples, sample containers and/or sample container carriers.

The pre-analytical, analytical and/or post-analytical stations may comprise at least one of a decapping station, a recapping station, an aliquot station, a centrifugation station, an archiving station, a pipetting station, a sorting station, a tube type identification station, a sample quality determining station, an add-on buffer station, a liquid level detection station, and a sealing/desealing station.

According to an embodiment, at least an input field or an output field for one of the laboratory stations on the transport plane is identified/marked using one of the geometric shapes.

### Brief description of the drawings

The invention will be described in detail with respect to the drawings schematically depicting embodiments of the invention. In detail:
- Fig. 1: shows a laboratory automation system according to a first embodiment,
- Fig. 2: shows a laboratory automation system according to a second embodiment,
- Fig. 3: shows a schematic top view on a part of a laboratory sample distribution system according to a first embodiment, and
- Fig. 4: shows a schematic top view on a part of a laboratory sample distribution system according to a second embodiment.

### Detailed description of the embodiments

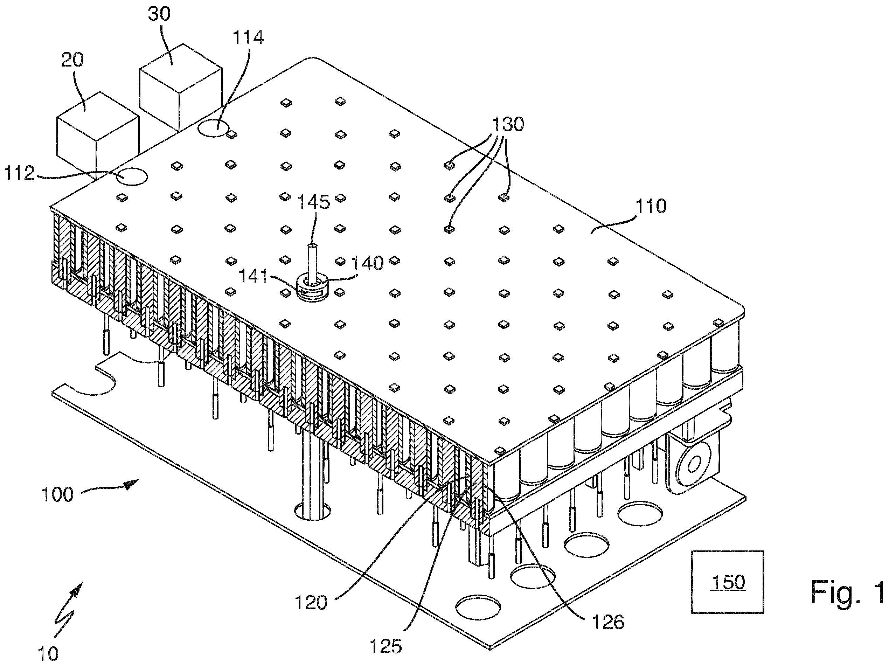

Fig. 1 shows a laboratory automation system 10. The laboratory automation system 10 comprises a first laboratory station 20, a second laboratory station 30 and a laboratory sample distribution system 100.

The laboratory sample distribution system 100 comprises a transport plane 110. Below the transport plane 110, a plurality of electro-magnetic actuators 120 are arranged in rows and columns forming a grid. Each electro-magnetic actuator 120 comprises a respective ferromagnetic core 125 being encircled by a coil 126.

A number of position sensors 130, being embodied as Hall-sensors, are distributed over the transport plane 110.

The laboratory sample distribution system 100 further comprises a plurality of sample container carriers 140. A sample container carrier 140 can carry a respective sample container 145, being embodied as laboratory tube. It is to be noted that only one laboratory sample container carrier 140 carrying a respective sample container 145 is shown in fig. 1 for exemplary purposes. A typical sample distribution system 100 comprises a plurality of such sample container carriers 140.

Each sample container carrier 140 comprises a magnetically active device 141 in the form of a permanent magnet. Thus, magnetic fields generated by the electro-magnetic actuators 120 can drive a sample container carrier 140 over the transport plane 110. Furthermore, the magnetic field generated by the permanent magnet 141 of a sample container carrier 140 can be detected by the position sensors 130, so that a feedback regarding the position of a sample container carrier 140 can be obtained.

Both the electro-magnetic actuators 120 and the position sensors 130 are electrically connected to a control device 150. The control device 150 can drive the electro-magnetic actuators 120 such that the sample container carriers 140 move along corresponding transport paths. It can also determine the position of each sample container carrier 140.

The laboratory stations 20, 30 are arranged adjacent to the transport plane 110. It is noted that these two laboratory stations 20, 30 are only shown for exemplary purposes in fig. 1, and that a typical laboratory automation system 10 comprises more than two laboratory stations 20, 30.

On the transport plane 110, a first geometric shape 112 and a second geometric shape 114 are provided. The geometric shapes 112, 114 are embodied as closed circles. They are printed directly on the transport plane 110.

As shown in fig. 1, the first geometric shape 112 is positioned adjacent to the first laboratory station 20, and the second geometric shape 114 is positioned adjacent to the second laboratory station 30. The geometric shapes 112, 114 define fields that are used as input and output fields for the laboratory stations 20, 30. In other words, these fields are used to put sample containers 145 from the laboratory stations 20, 30 into sample container carriers 140, or vice versa. The fields can also be denoted as handover fields.

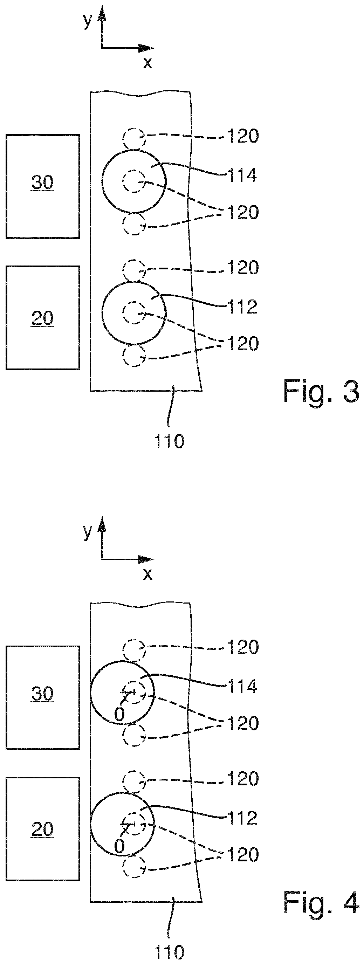

Now referring to Fig. 3 showing a schematic top view on the left part of the laboratory sample distribution system 100 of Fig. 1, the geometric shapes 112, 114 are positioned above and coaxially with a winding axis of the coil 126 of the corresponding electromagnetic actuator 120.

Now referring to Fig. 4 showing a schematic top view on an alternative embodiment of the left part of the laboratory sample distribution system 100 of Fig. 1, the geometric shapes 112, 114 are positioned with a horizontal offset O in x-direction with regard to a winding axis of the coil 126 of the corresponding electromagnetic actuator 120. This may be useful e.g. if the laboratory stations 20, 30 comprise electro-magnetic actuators applying a magnetic force to a sample container carrier 140 in order to move the sample container carrier 140 towards the laboratory stations 20, 30.

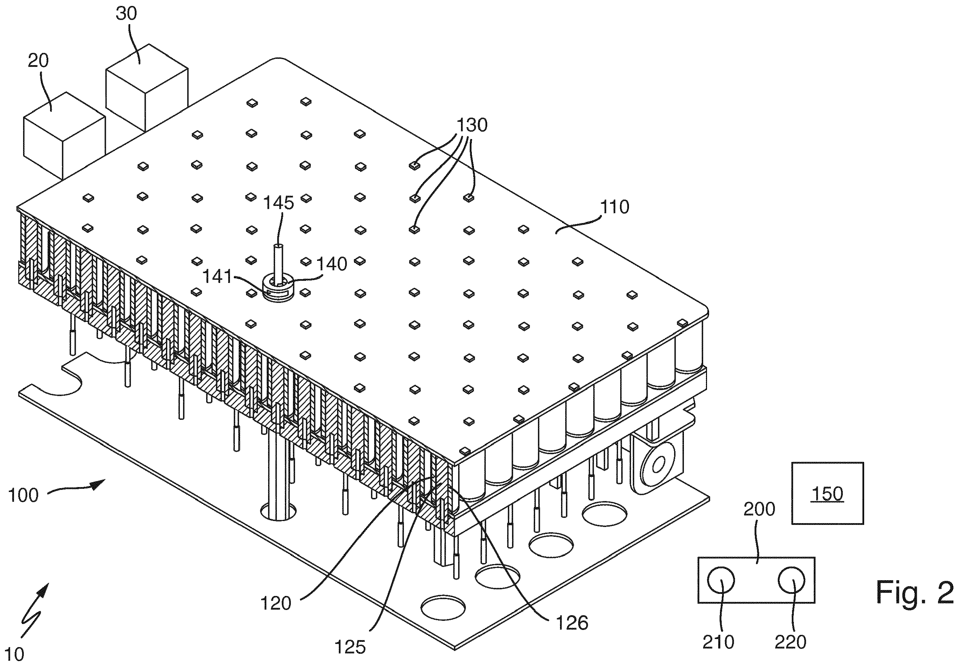

Fig. 2 shows an alternative embodiment of a laboratory automation system 10. The laboratory automation system 10 comprises an alternative laboratory sample distribution system 100.

In the state shown in fig. 2 no geometric shapes are printed on the transport plane 110.

The laboratory sample distribution system 100 additionally comprises a flat template 200 that is adapted to be used in order to draw two circles on the transport plane 110. For that purpose, the flat template has a first circular orifice 210 and a second circular orifice 220. These circular orifices 210, 220 are adapted such that geometric shapes in the form of closed circles can be drawn on the transport plane 110 similarly to the geometric shapes 112, 114 shown in fig. 1 if the flat template 200 is placed on the transport plane 110 at a corresponding position adjacent to the laboratory stations 20, 30.

Thus, the flat template 200 allows for the possibility that an operator draws the geometric shapes on the transport plane 110 at his own, e.g. during a bringing into service of the laboratory automation system 10.

## Claims

1. Laboratory sample distribution system (100), comprising
- a transport plane (110),
- a number of sample container carriers (140),
- drive means (120) being adapted to move the sample container carriers (140) on the transport plane (110), and
- a control device (150) being configured to control the movement of the sample container carriers (140) on top of the transport plane (110) by driving the drive means (120) such that the sample container carriers (140) move along corresponding transport paths,
- wherein a number of optically recognizable geometric shapes (112, 114) are placed on the transport plane (110), each geometric shape (112, 114) representing a dedicated field on the transport plane (110).

2. Laboratory sample distribution system (100) according to claim 1,
**characterized in that**
- the geometric shapes (112, 114) are printed on the transport plane (110).

3. Laboratory sample distribution system (100) according to one of the preceding claims,
**characterized in that**
- the geometric shapes (112, 114) are printed on a sheet covering the transport plane (110).

4. Laboratory sample distribution system (100) according to one of the preceding claims,
**characterized in that**
- the geometric shapes (112, 114) are printed on a removable cover sheet which protects a sliding surface of the transport plane (110) during transport and/or installation.

5. Laboratory sample distribution system (100) according to one of the preceding claims,
**characterized in that**
- a first group of the geometric shapes (112, 114) represents a set of input fields.

6. Laboratory sample distribution system (100) according to one of the preceding claims,
**characterized in that**
- a second group of the geometric shapes (112, 114) represents a set of output fields.

7. Laboratory sample distribution system (100) according to claim 5 and claim 6,
**characterized in that**
- the geometric shapes (112, 114) of the first group are rotated by 180° with respect to the geometric shapes (112, 114) of the second group.

8. Laboratory sample distribution system (100) according to one of the preceding claims,
**characterized in that**
- the geometric shapes (112, 114) are placed along a straight line adjacent to an edge of the transport plane (110).

9. Laboratory sample distribution system (100), comprising
- a transport plane (110),
- a number of sample container carriers (140),
- drive means (120) being adapted to move the sample container carriers (140) on the transport plane (110),
- a control device (150) being configured to control the movement of the sample container carriers (140) on top of the transport plane (110) by driving the drive means (120) such that the sample container carriers (140) move along corresponding transport paths, and
- a flat template (200) having a plurality of holes (210, 220), the holes (210, 220) being arranged and configured for providing outlines of geometric shapes (112, 114) such that these geometric shapes (112, 114) can be drawn optically recognizably on the transport plane (110) using the template (200) when it is placed on the transport plane (110), each geometric shape (112, 114) drawn on the transport plane (110) representing a dedicated field on the transport plane (110).

10. Laboratory sample distribution system (100) according to claim 9,
**characterized in that**
- the template (200) is made of hard paper or plastic material.

11. Laboratory sample distribution system (100) according to one of the preceding claims,
**characterized in that**
- the geometric shapes (112, 114) are circles.

12. Laboratory sample distribution system (100) according to one of the preceding claims,
**characterized in that**
- the drive means are formed as electromagnetic actuators (120) being located below the transport plane (110) and being controllable by the control device (150), and
- the sample container carriers (140) each comprise a magnetically active device for interaction with a magnetic field generated by the electromagnetic actuators (120) such that a magnetic drive force is applied to the sample container carriers (140).

13. Laboratory sample distribution system (100) according to claim 12,
**characterized in that**
- the geometric shapes (112, 114) are positioned depending on positions of the electromagnetic actuators (120).

14. Laboratory automation system (10), comprising
- a number of laboratory stations (20, 30), preferably pre-analytical, analytical and/or post-analytical stations, and
- a laboratory sample distribution system (100) according to one of the preceding claims.

15. Laboratory automation system (10) according to claim 14,
**characterized in that**
- at least an input field or an output field for one of the laboratory stations (20, 30) on the transport plane (110) is identified using one of the geometric shapes (112, 114).
